(19) **Europäisches Patentamt**
**European Patent Office**
**Office européen des brevets**

(11) **EP 4 012 495 B1**

(12) **EUROPEAN PATENT SPECIFICATION**

(45) Date of publication and mention
of the grant of the patent:
**30.07.2025 Bulletin 2025/31**

(21) Application number: **20850392.0**

(22) Date of filing: **10.06.2020**

(51) International Patent Classification (IPC):
*G06T 7/80* (2017.01)      *G03B 35/08* (2021.01)
*G03B 43/00* (2021.01)

(52) Cooperative Patent Classification (CPC):
**G03B 35/08; G03B 43/00; G06T 7/85;**
G06T 2207/30252

(86) International application number:
**PCT/JP2020/022892**

(87) International publication number:
**WO 2021/024612 (11.02.2021 Gazette 2021/06)**

(54) **METHOD FOR CORRECTING STEREOCAMERA AND DEVICE FOR CORRECTING STEREOCAMERA**

VERFAHREN UND VORRICHTUNG ZUR KORREKTUR EINER STEREOKAMERA

PROCÉDÉ DE CORRECTION DE STÉRÉOCAMÉRA ET DISPOSITIF DE CORRECTION DE STÉRÉOCAMÉRA

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **07.08.2019 JP 2019144984**

(43) Date of publication of application:
**15.06.2022 Bulletin 2022/24**

(73) Proprietor: **Astemo, Ltd.**
**Tokyo 100-0004 (JP)**

(72) Inventors:
• **IMAGAWA Seiji**
**Tokyo 100-8280 (JP)**
• **BETSUI Keiichi**
**Tokyo 100-8280 (JP)**

(74) Representative: **Mewburn Ellis LLP**
**Aurora Building**
**Counterslip**
**Bristol BS1 6BX (GB)**

(56) References cited:
DE-A1- 102008 008 619      JP-A- 2004 132 870
JP-A- 2004 191 354      JP-A- 2013 250 907
JP-A- 2019 074 535      JP-A- 2019 078 941
JP-B2- 5 589 823      US-B2- 7 124 046

## Description

Technical Field

The present invention relates to a method for correcting a stereocamera and device for correcting a stereocamera.

Background Art

As a background art in this technical field, PTL 1 is known. This literature states that a plurality of charts placed at different distances are photographed with a stereocamera to correct an optical distortion of the camera and to calibrate a translational shift of one camera with another camera as a reference.

PTL 1 states that "Provided is an stereocamera adjustment device that adjusts, by image processing, an optical distortion and a positional shift of the stereocamera by converting, using parameters, each of a pair of image data output from a pair of cameras constituting a stereocamera. This stereocamera adjustment device has a correction unit and a calibration unit. Here, targeting a pair of image data output by capturing a chart having a predetermined pattern with a stereocamera, the correction unit calculates correction parameter for converting the image data so that the pattern projected on an image plane defined by the image data approaches a predetermined pattern included in the chart. Here, this correction parameter corrects at least the distortion of the image data due to the optical distortion of the camera. The calibration unit calculates a calibration parameter for correcting the shift of the pair of image data due to the positional shift of the pair of cameras, using, as a constraint condition, the characteristics of the image related to the pair of image data converted by the calculated correction parameters.".

PTL 2 states that a chart present at an infinite position is photographed using a collimator and a distance conversion parameter is corrected using parallax data and actual distance data. PTL 2 states that, for example, "A stereocamera calibrating device 300 includes a first camera 320, a second camera 318, and a camera stay 140. A collimator unit 302 forms a light path which is equivalent to a case that a test chart 306 disposed at an interval from a stereocamera is disposed at an infinity position. A parallax calculating portion 362 calculates parallax data corresponding to different optical distances between the test chart 306 and the stereocamera from right and left images captured by the stereocamera. A parameter calculating portion 364 calculates a parallax offset b and a distance conversion parameter a which are ranging parameters of the stereocamera by using the parallax data calculated by the parallax calculating portion 362 and actual distance data to the test chart.". PTL 2 states that "The collimator unit includes a diameter that can simultaneously generate an optical path equivalent to that where the reference object to the first camera and the second camera is placed at an infinity position".

Further background art is known from PTL 3 and PTL 4.

Citation List

Patent Literature

    PTL 1: JP 2004-132870 A
    PTL 1: JP 2012-132739 A
    PTL 3: US 7 124 046 B2
    PTL 4: DE 10 2008 008619 A1

Summary of Invention

Technical Problem

A stereocamera measures the distance of a photographed object from images obtained by photographing with the left and right cameras. At this time, in order to use the relative positions of the object in the left and right images, it is necessary to correct external parameters such as the relative position and orientation of the camera and internal parameters such as the optical distortion of the lens.

These corrections are performed when the stereocamera is assembled. After that, if it is mounted on a vehicle, the light rays coming from the object change due to the influence of the windshield and the like, causing image translation (horizontal and vertical image shift) and rotation. Since these changes cause an error in the measurement distance by the stereocamera, further correction is required.

When using one chart placed at a predetermined distance at the time of correcting a stereocamera, it is necessary to adjust the position of the test camera with respect to the chart with high accuracy. However, it is difficult to adjust the installation with high accuracy in a state of being mounted on the vehicle, or it creates an unnecessary restriction.

In the case of placing two charts at different distances as in PTL 1, high-accuracy installation of the test camera becomes unnecessary, but the installation accuracy of the charts becomes necessary according to the distance. The longer the distance from the stereocamera to the chart, the lower the required accuracy for chart installation, but on the other hand, a large footprint is required.

It is possible to optically make the chart appear to be far away as in PTL 2, and well-known devices include a collimator. The collimator used for inspection of a single camera is known. If the test camera moves while photographing with each of the left and right cameras, a correction error will occur due to camera installation error. For this reason, it is stated that the diameter is increased so that the left and right cameras view the chart at the same time.

However, a large-diameter lens has the disadvantages that it is expensive and heavy, and that the device size increases according to the focal length. The above-mentioned optical device has a problem that it is difficult to cope with the rotation of an image because it is difficult to perform photographing with a wide angle of view.

Therefore, the present invention has been made in view of the above problems, and an object of the present invention is to correct a stereocamera with high accuracy and at low cost.

Solution to Problem

The present invention is a method for correcting a stereocamera mounted on a vehicle, in which a first optical device that has a first chart having a predetermined pattern and a mirror surface having a diameter equal to or greater than a baseline length of the stereocamera generates a virtual image of the first chart, and the stereocamera uses images obtained by capturing the virtual image with a plurality of cameras to correct a parameter corresponding to the relative position of the images obtained by the cameras, characterized in that the first optical device includes either a reflecting telescope or a catadioptric telescope.

Advantageous Effects of Invention

Therefore, the present invention can provide a chart of a plurality of distances in a space-saving manner at low cost, and can highly accurately perform correction of a stereocamera while relaxing the installation accuracy of a vehicle.

The detail of at least one embodiment of the subject matter disclosed in the present description will be mentioned in the accompanying drawings and the following description. Other features, aspects, and effects of the disclosed subject matter will become apparent from the following disclosure, drawings, and claims.

Brief Description of Drawings

[FIG. 1] FIG. 1 is a view illustrating a first embodiment of the present invention and illustrating an example of a device for correcting a stereocamera.
[FIG. 2] FIG. 2 is a view illustrating the first embodiment of the present invention and illustrating an example of an optical device.
[FIG. 3] FIG. 3 is a view illustrating the first embodiment of the present invention and illustrating an example of an infinite distance chart.
[FIG. 4] FIG. 4 is a view illustrating the first embodiment of the present invention and illustrating an example of a finite distance chart.

[FIG. 5] FIG. 5 is a view illustrating the first embodiment of the present invention and illustrating another example of a finite distance chart.
[FIG. 6] FIG. 6 is a view illustrating the first embodiment of the present invention and illustrating an example of a finite distance chart and an infinite distance chart observed from a right camera of the stereocamera.
[FIG. 7] FIG. 7 is a view illustrating the first embodiment of the present invention and illustrating another example of a finite distance chart.
[FIG. 8] FIG. 8 is a view illustrating the first embodiment of the present invention and illustrating a modification of a device for correcting a stereocamera.
[FIG. 9] FIG. 9 is a view illustrating the first embodiment of the present invention and illustrating a modification of the device for correcting the stereocamera.
[FIG. 10] FIG. 10 is a view illustrating the first embodiment of the present invention and illustrating an example of the stereocamera.
[FIG. 11] FIG. 11 is a flowchart illustrating the first embodiment of the present invention and illustrating an example of correction processing.
[FIG. 12] FIG. 12 is a view illustrating a second embodiment of the present invention and illustrating an example of a device for correcting a stereocamera.
[FIG. 13] FIG. 13 is a flowchart illustrating the second embodiment of the present invention and illustrating an example of correction processing.
[FIG. 14] FIG. 14 is a view illustrating the second embodiment of the present invention and illustrating another example of the device for correcting the stereocamera.
[FIG. 15] FIG. 15 is a flowchart illustrating the second embodiment of the present invention and illustrating another example of correction processing.
[FIG. 16] FIG. 16 is a view illustrating a third embodiment of the present invention and illustrating an example of a device for correcting a stereocamera.
[FIG. 17] FIG. 17 is a flowchart illustrating the third embodiment of the present invention and illustrating an example of correction processing.
[FIG. 18] FIG. 18 is a flowchart illustrating the third embodiment of the present invention and illustrating an example of a captured image.
[FIG. 19] FIG. 19 is a view illustrating the first embodiment of the present invention and illustrating an example of the optical device.

Description of Embodiments

Embodiments of the present invention will be described below with reference to the accompanying drawings.

[First Embodiment]

In the present embodiment, an example of the device for correcting the stereocamera and the method for correcting the stereocamera will be described.

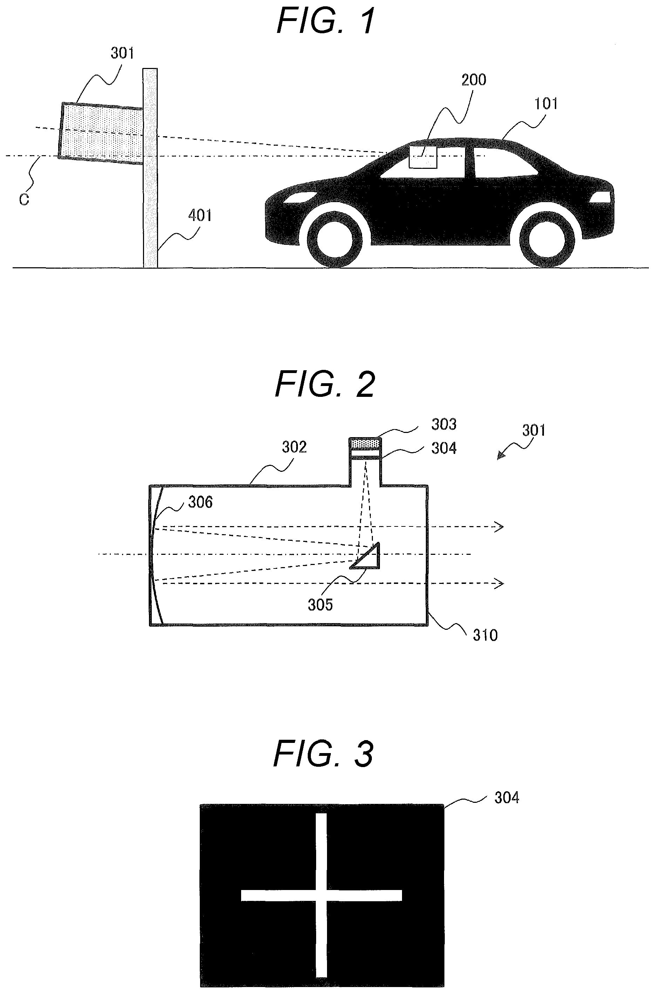

FIG. 1 is an example of a configuration view of a device for correcting a stereocamera 200 of the present embodiment. In FIG. 1, 101 is a vehicle mounted with a stereocamera, 201 is the stereocamera, 301 is an optical device that generates a virtual image of an infinite distance chart, and 401 is a two-dimensional planar finite distance chart placed at a predetermined distance. The correction device includes the optical device 301 and the finite distance chart 401.

After the vehicle 101 is stopped at a predetermined position, the stereocamera 200 captures a virtual image of the infinite distance chart generated by the optical device 301 and an image of the finite distance chart 401, and corrects a parameter for calculating parallax or distance using a captured image.

Here, the stereocamera 200 has completed geometric correction in advance, and in the present correction step, the optical distortion newly generated in the windshield of the vehicle 101 is corrected. The distortion generated in the windshield is rotation and shift of the image, and enlargement/reduction and flatness of the image are small enough for distance measurement to have no actual harm.

FIG. 2 is a view illustrating an example of an internal configuration of the optical device 301. 302 is a housing, 303 is a light source, 304 is a transmissive infinite distance chart, 305 is a plane mirror that changes the direction of light ray, and 306 is a concave mirror.

In the optical device 301, the concave mirror 306 is installed on the inner circumference of one end of the cylindrical housing 302, and an opening end 310 is formed on the other end. An eyepiece portion is formed at a predetermined position on the side surface of the housing 302, and the infinite distance chart 304 and the light source 303 are installed on the eyepiece portion.

The light ray that is incident from the light source 303, transmitted through one point of the infinite distance chart 304, and emitted is output as parallel light from the opening end 310 on the right side in the figure via the plane mirror 305 and the concave mirror 306.

Therefore, when observing this output light from the opening end 310 side, it is possible to observe a virtual image of the infinite distance chart 304 at an infinite distance. The concave mirror 306 has a diameter equal to or greater than the baseline length of the stereocamera 200, so that the left and right cameras of the stereocamera 200 can simultaneously capture a virtual image of the same infinite distance chart 304.

FIG. 3 illustrates an example of the infinite distance chart 304. The infinite distance chart 304 forms a transmissive cross pattern on a black background. The width of the cross line is determined so that the width of the image at the time of photographing with the stereocamera 200 becomes equal to or less than the size of the image sensor (pixel), and the infinite distance chart 304 is installed so that the inclination of the cross line after geometric correction is about 10 degrees with respect to the pixel arrangement of the image sensor.

These are for detecting the position on the image sensor at the point where the cross lines intersect. The contrast for ensuring a necessary detection accuracy is adjusted with the light source 303. A diffuser plate may be inserted between the infinite distance chart 304 and the light source 303 in order to uniform the brightness of the cross lines.

By making an appropriate installation position of the infinite distance chart 304, it is possible to make the virtual image of the light ray transmitted through the cross line appear to be an infinite distance. It is correct that the parallax at the intersection of the cross lines detected by the left camera and the right camera at this time becomes zero. Therefore, the relative positions of the left and right images are corrected so as to satisfy this condition.

The configuration of the optical device 301 is similar to that of the Newtonian reflecting telescope. The Maksutov-Newtonian or the epsilon reflecting telescope may be adopted. The usual method of using the Newtonian reflecting telescope is to collect, via the concave mirror 306 and the plane mirror 305, parallel light rays emitted from a distant object, and to observe the image of the object through the eyepiece.

In the present invention, the infinite distance chart 304 is installed at the light collection point, and a virtual image of the infinite distance chart 304 is generated at a distance of substantially infinity via the plane mirror 305 and the concave mirror 306.

That is, the present optical device 301 can be achieved at low cost by using a commercially available telescope. In this case, by installing a film camera not illustrated into a draw tube of the telescope (optical device 301) and installing the infinite distance chart 304 on a film guide rail of the film camera, it is possible to easily install the infinite distance chart 304 at an appropriate position.

Therefore, it is convenient that the width of the infinite distance chart 304 has a film width of equal to or less than 35 mm. Even if a commercially available catadioptric telescope is used instead of the reflecting telescope, an inexpensive and highly accurate optical device can be achieved.

The light ray transmitted through the infinite distance chart 304 generates a virtual image at an infinite distance, but depending on the accuracy of the optical system, a perfectly parallel light rays can sometimes be obtained. Therefore, it is possible to tolerate a decrease in parallelism to an extent that it does not affect the calibration accuracy of the stereocamera 200 although not a perfectly parallel light ray. Therefore, the present embodiment assumes that the infinite distance includes substantially infinity.

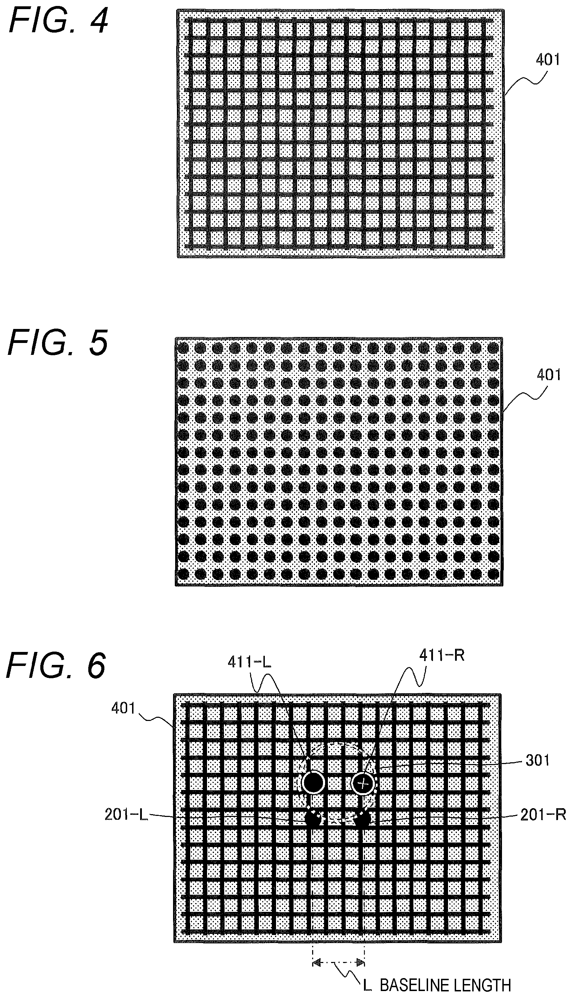

FIG. 4 illustrates an example of a design of the finite distance chart 401 placed at a predetermined distance. The design of the finite distance chart 401 only needs to be able to associate the position on the image sensor with respect to the position on the chart. Therefore, the design is not limited to this, and a design in which a feature point is arranged as in the finite distance chart 401 of FIG. 5 may be used.

Alternatively, since it is sufficient that the left image and the right image can be associated with each other, the finite distance chart 401 may have a design in which a frequency in a predetermined range or a plurality of frequencies are superimposed. The stereocamera 200 photographs the design of the finite distance chart 401, and corrects the rotation direction of the image so that the corresponding points of the left camera image and the right camera image are arranged on the epipolar line.

The finite distance chart 401 is formed of a rectangular flat plate and is placed at a predetermined distance in front of the vehicle 101. More precisely, the finite distance chart 401 is installed so as to be at a predetermined distance from the camera 201 of the stereocamera 200 placed inside the windshield of the vehicle 101.

FIG. 6 illustrates the finite distance chart 401 and the infinite distance chart 304 observed from the right camera of the stereocamera 200.

The finite distance chart 401 uses the design of FIG. 4, and the black circles on center right and center left indicate optical axes of the right camera (201-R) and the left camera (201-L), respectively. These black circles are shown for the sake of explanation, but needs not be present necessary in practice.

The upper solid circles in the figure of optical axis points (201-R and 201-L) are two through holes 411-L and 411-R formed in the finite distance chart 401, and the cross indicated inside (411-R) the solid circle on the right side is the infinite distance chart 304. The circle shown by the dotted line in the figure indicates the shape on the opening end 310 side of the housing 302 of the optical device 301 placed on the back surface of the finite distance chart 401, and is substantially equal to the diameter of the reflecting telescope.

The left and right through holes 411-L and 411-R are through holes of the finite distance chart 401 in which the centers of them are placed apart by the baseline length of the stereocamera 200, and a virtual image of the infinite distance chart 304 of the optical device 301 placed on the back surface through the through holes is observed. In the following description, when the left and right of the through hole are not specified, the reference numeral "411", where the "-" and subsequent parts are omitted, is used. The same applies to the reference numeral s of other components.

From the right camera 201-R of the stereocamera 200, the cross on the right side can be visually recognized but the cross on the left side cannot be seen. Similarly, from the left camera 201-L, the cross on the left side can be visually recognized but the cross on the right side cannot be seen.

Of the rays output from the optical device 301, the only rays that contribute to generation of the image of the infinite distance chart 304 by the left and right cameras 201 are the rays that enter the entrance pupil of the camera 201. Therefore, the size of the solid circle (through hole 411) is determined by the installation error of the stereocamera 200, i.e., the accuracy of the stop position of the vehicle 101. Assuming that the entrance pupil diameter of the left and right cameras 201 is g and the installation error of the stereocamera 200 is $\pm h$, the radius r of the solid circle (through hole 411) is

$$r \geq g / 2 + h.$$

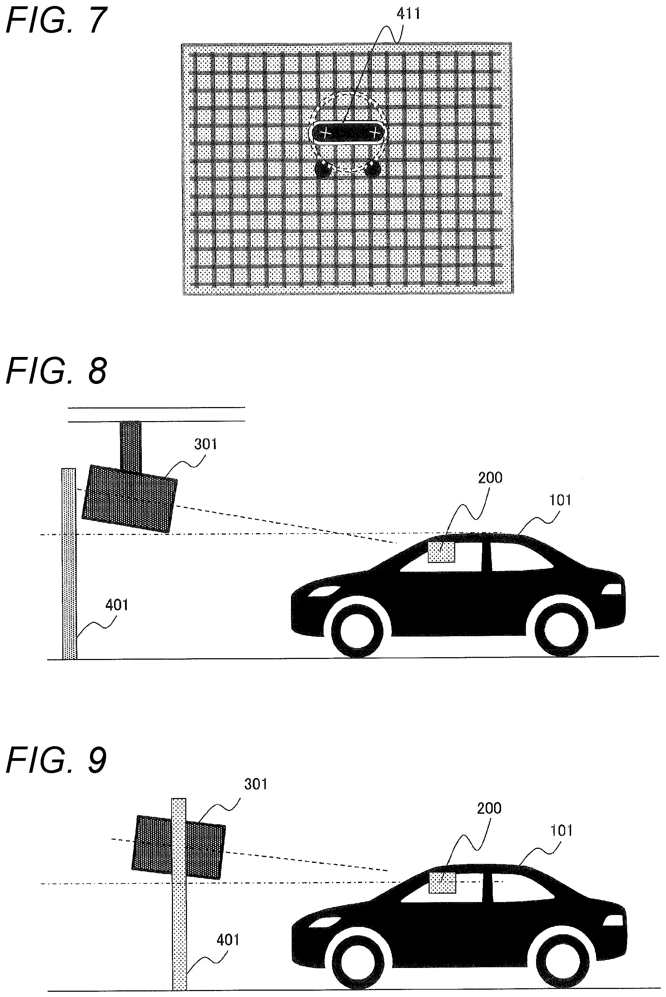

Here, the shape of the above two through holes 411 may be one oval through hole 411 including the two through holes 411-L and 411-R as shown in FIG. 7. The circle shown by the dotted line in FIG. 6 indicates the opening end 310 side of the housing 302 of the optical device 301 placed on the back surface of the finite distance chart 401, and is substantially equal to the diameter. Since the through hole 411 needs to be inside the housing 302 indicated by the dotted line circle in FIG. 6, a diameter R of the optical device 301 is

$$R \geq L + g + 2h$$

where the baseline length of the stereocamera 200 is L.

In FIG. 6, the left and right through holes 411-L and 411-R are placed above the optical axes of the left and right cameras 201 because there is less influence even if the position shields the finite distance chart 401.

When the finite distance chart 401 and the infinite distance chart 304 are photographed at the same time with the stereocamera 200, it is not possible to photograph the finite distance chart 401 on the entire necessary angle of view, and it is not possible to photograph the finite distance chart 401 in the part where the infinite distance chart 304 overlaps.

Here, in the image of the stereocamera 200, the area below the vanishing point is the area where the road surface and the object in front appear, which is an important area for object recognition, and the area above the vanishing point is the area where there are many objects that do not require accuracy such as signals, signs, and the sky.

Therefore, it is desirable to place the infinite distance chart 304 so as to appear above the vanishing point. On the other hand, in order to secure the recognition performance of a distant object, the stereocamera 200 is placed so that the vicinity of the optical axis of the lens having high resolution coincides with the vanishing point.

There is a concern that the detection error of the infinite distance chart 304 increases due to the influence of distortion or the like in the peripheral portion where the image height is high away from the optical axis of the camera 201. Therefore, the left and right through holes 411 are placed in the vicinity of the optical axis of the left and right cameras 201 and above the optical axis or the vanishing point, where the left and right through holes 411 do not overlap the optical axis or the vanishing point. In FIG. 1, the optical device 301 is installed at a position higher than an optical axis C of the stereocamera, and the optical axis of the optical device 301 faces the stereocamera 200 for the above reason.

Here, when the optical device 301 is fixed to the ceiling or the like independently of the finite distance chart 401 as in FIG. 8, the bottom portion of the optical device 301 may be placed at a position higher than the top portion of the vehicle 101 so as not to hinder the movement of the vehicle 101 after photographing or correction.

In FIGS. 6 and 7, the peripheral edge of the finite distance chart 401 indicated by the through hole 411 is bordered with a color such as black, white, or red. This is for making it clear the boundary between the infinite distance chart 304 and the finite distance chart 401 to facilitate image processing.

As shown in FIG. 9, the optical device 301 may have a structure of penetrating the finite distance chart 401.

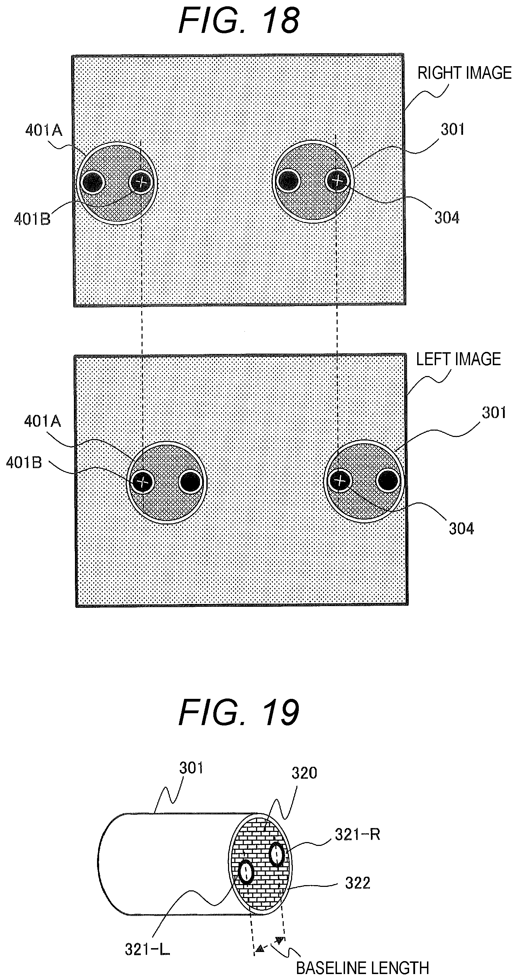

In this case, as shown in FIG. 19, through holes 321-L and 321-R for viewing a virtual image of the infinite distance chart 304 from the above-described left and right cameras 201 may be formed on the opening end 310 side of the optical device 301 and a second finite distance chart 320 may be provided in an area other than the through hole 321. A peripheral portion 322 of the outer periphery of the second finite distance chart 320 can be colored such as black, white, or red as described above to ensure image recognition accuracy.

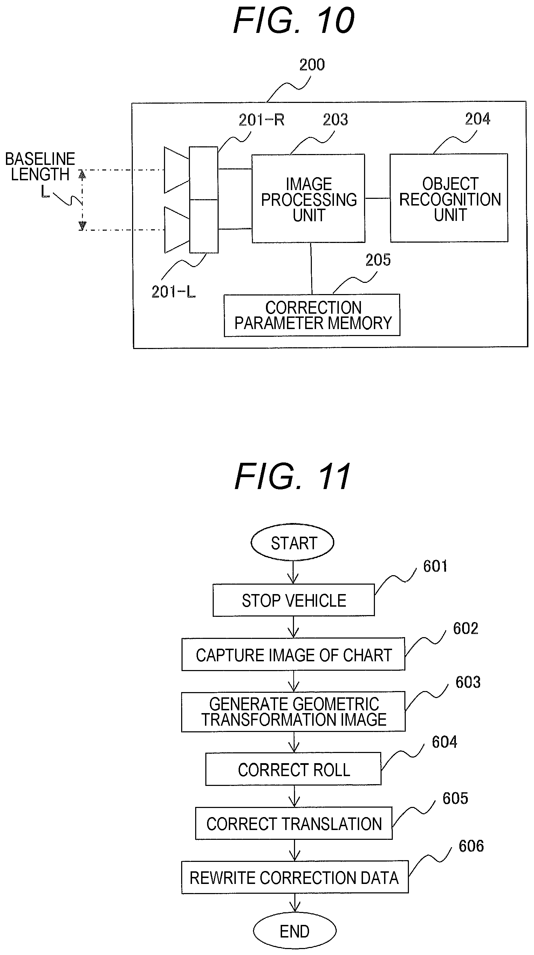

Next, the correction procedure will be described. First, the configuration of the stereocamera 200, which is the correction target of the present invention, will be described with reference to FIG. 10.

201-R is the right camera having a lens and an image sensor, 201-L is the left camera having a lens and an image sensor, 203 is an image processing unit that includes geometric correction, parallax detection, and distance detection, 204 is an object recognition unit, and 205 is a correction parameter memory.

The image data acquired by the camera 201-R and the camera 201-L are sent to the image processing unit 203, and the image processing unit 203 geometrically transforms the sent image data using the information in the correction parameter memory 205.

The correction parameter memory 205 stores correction information corrected at the time of manufacturing the stereocamera 200 before executing the correction of the present invention. The image processing unit 203 generates parallax image data and distance image data from the left and right geometric transformation image data, and sends the generated image data to the object recognition unit 204. The object recognition unit 204 performs object recognition using the sent image data, and outputs the object recognition result to the outside as vehicle control information.

As described above, the stereocamera 200 by itself, targeted by the present invention, has completed the geometric correction and the correction of the relative positions of the left and right camera images. Therefore, when mounted on the vehicle 101, the variation in the thickness of the windshield causes the rotation of the image and the shift in the image plane direction, and the parameter memory 205 is updated by correcting this. The enlargement/reduction and flatness of the image are small enough for distance measurement to have no actual harm.

The correction procedure in the device for correcting FIG. 1 will be described with reference to FIG. 11. The vehicle 101 is stopped at a predetermined position (601). The stereocamera 200 captures an image of the infinite distance chart 304 (602).

From the captured left and right images, respective geometric transformation images are generated by the image processing unit 203 using the information in the correction parameter memory 205 (603). The image processing unit 203 corrects a relative rotation shift of the left and right images by using the finite distance chart 401 portion of the left and right images after geometric transformation (604).

The image processing unit 203 corrects a relative translational shift of the left and right images by using the portion of the infinite distance chart 304 of the left and right images after geometric transformation (605). The image processing unit 203 rewrites the data in the correction parameter memory 205 in consideration of the correction amount obtained in steps 603 and 604 above (606).

When the vehicle 101 is moved forward after the above procedure is finished, the finite distance chart 401 and the optical device 301 fixed to the finite distance chart 401 may be moved upward or left and right. In the case where the finite distance chart 401 and the optical device 301 are placed as shown in FIG. 8, if the lowest point of the optical device 301 is placed at a position higher than the highest point of the vehicle, only the finite distance chart 401 may be moved.

As described above, the device for correcting the present embodiment can provide charts of a plurality of distances in a space-saving manner at low cost, and can highly accurately correct the stereocamera 200 while relaxing the installation accuracy of the vehicle 101.

[Second Embodiment]

In the first embodiment, the correction device and the correction method when two charts are photographed at the same time are shown, but the infinite distance chart 304 and the finite distance chart 401 may be photographed independently.

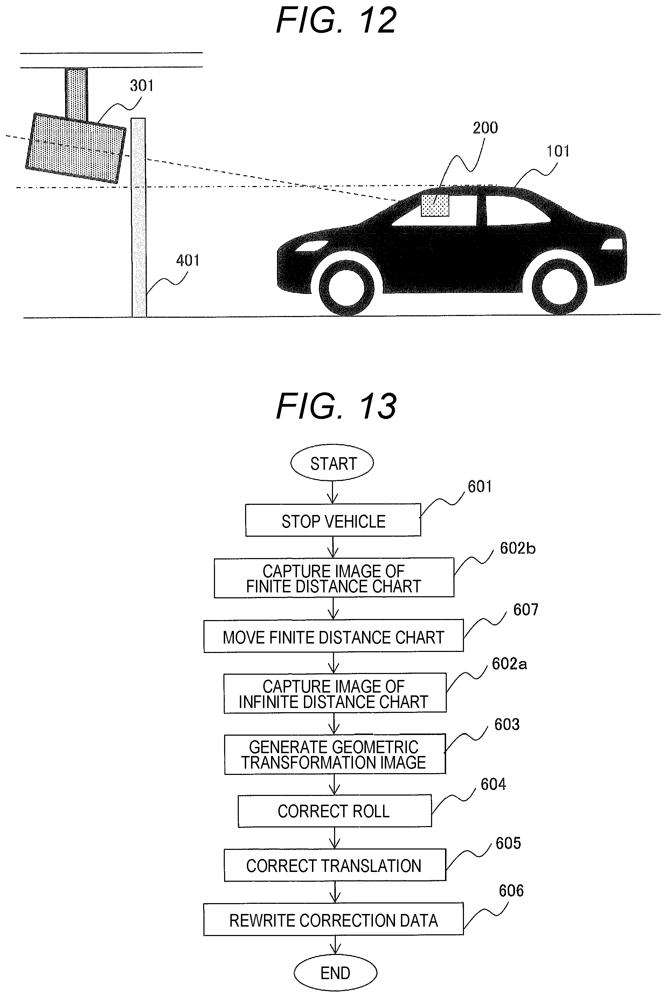

In the present embodiment, an example in which the infinite distance chart 304 and the finite distance chart 401 are photographed in order will be described. FIG. 12 is an example of a configuration view of the device for correcting the stereocamera 200 of the present embodiment.

Since the components of the correction device are the same as those in FIG. 8 of the first embodiment, they will be omitted. The optical device 301 is fixed at a position higher than the total height of the vehicle 101 on the back surface of the finite distance chart 401. The finite distance chart 401 has a mechanism that can move upward.

The procedure of correction of the stereocamera 200 using the correction device is shown in the flowchart of FIG. 13. After stopping the vehicle 101 (601), the stereocamera 200 photographs the finite distance chart 401 (602b). At this time, the finite distance chart 401 is placed at the position shown in FIG. 12, and the stereocamera 200 only photographs the finite distance chart 401, and does not photograph the infinite distance chart 304.

After finishing the photographing (602b), the finite distance chart 401 is moved upward and placed at a position where the infinite distance chart 304 is not interrupted (607). The stereocamera 200 photographs the infinite distance chart 304. Since steps 603 to 606 are the same as those in the first embodiment, they will be omitted.

By placing the finite distance chart 401 and the infinite distance chart 304 of the optical device 301 as described above and performing photographing in order by the stereocamera 200, it is possible to perform photographing without interrupting the chart of each other and to correct the entire chart.

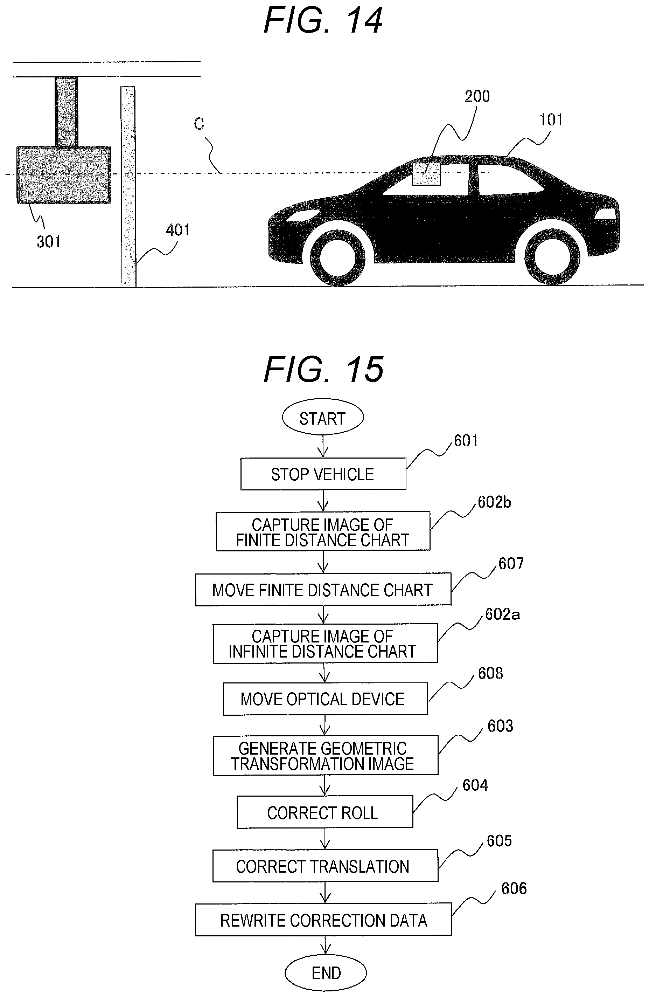

By providing also the optical device 301 with a vertically moveable mechanism, it is possible to place the optical device 301 at the height of the optical axis C of the stereocamera 200 as shown in FIG. 14.

The correction procedure in this case is shown in the flowchart of FIG. 15. After stopping the vehicle (601), the stereocamera 200 photographs the finite distance chart 401 (602b). At this time, the finite distance chart 401 and the optical device 301 are placed at the position shown in FIG. 14. Only the finite distance chart 401 is photographed, and the infinite distance chart 304 is not photographed.

After finishing the photographing (602b), the finite distance chart 401 is moved upward (or in the vehicle width direction) and placed at a position where the infinite distance chart 304 is not interrupted (607). The stereocamera 200 photographs the infinite distance chart 304 (602a). After finishing the photographing (602a), the optical device 301 is moved upward (608). Since steps 603 to 606 are the same as those in the first embodiment, they will be omitted. Here, the movement of the optical device 301 (608) may be performed after the data rewriting (606) because the movement of the optical device 301 only needs not to interfere with the movement of the vehicle 101.

The optical device 301 may be placed in front of the finite distance chart 401. It is convenient that the closer to the stereocamera 200 the optical device 301 is placed, the more the requirement for the installation angle is relaxed.

[Third Embodiment]

In the above-mentioned first embodiment and the second embodiment, the finite distance chart 401 is a two-dimensional plane chart placed at a finite distance, but the finite distance chart 401 may be a virtual image at an infinite distance similarly to the infinite distance chart 304.

This configuration can correct the relative rotation shift of the left and right camera images by using both the infinite distance chart 304 and the finite distance chart 401 while correcting the relative translational shift of the both camera images from the image position of either the infinite distance chart 304 or the finite distance chart 401.

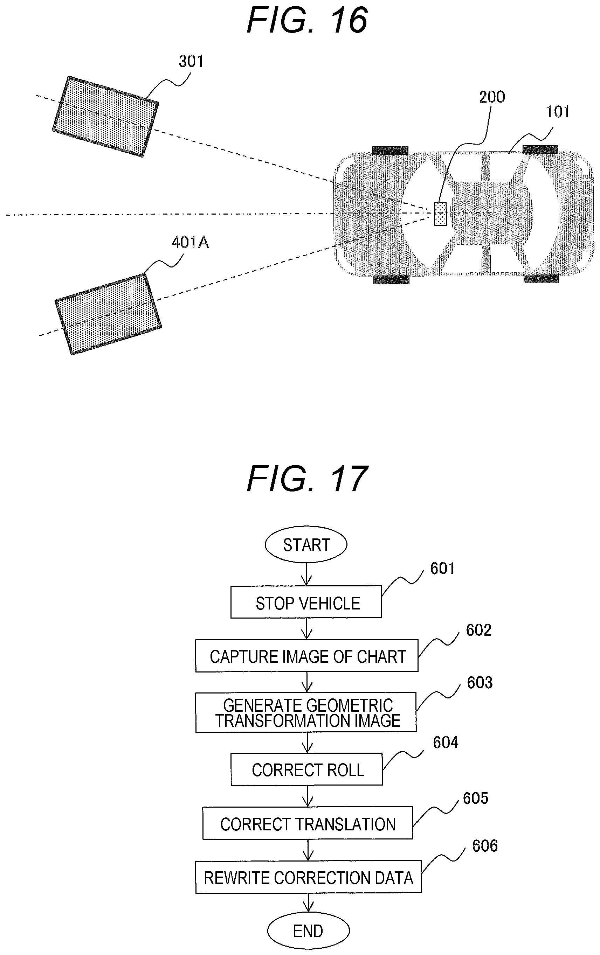

In the present embodiment, an example in which the finite distance chart 401 is a virtual image of an infinite distance will be described. FIG. 16 is an example of a configuration view of the device for correcting the stereocamera 200 of the present embodiment. The components are the same as those in FIG. 8, but an optical device 401A has the same configuration as that of the optical device 301, and irradiates a virtual image of an infinite distance chart 401B of a cross pattern at an infinite distance.

Both the optical device 301 and the optical device 401A are fixed to the ceiling or the like and are placed at a position higher than the total height of the vehicle 101.

FIG. 18 schematically illustrates images of the infinite distance chart 304 and the infinite distance chart 401B captured by the left and right cameras 201. The right image is illustrated on the upper side, and the left image is illustrated on the lower side. In each of the left and right images, images of the infinite distance chart 304 and the infinite distance chart 401B and the optical device 301 and the optical device 401A that generate them respectively are formed at different positions.

It is convenient that the both images are farther apart in order to highly accurately correct the rotation shift. Since each of the infinite distance chart 304 and the infinite distance chart 401B appears to be at an infinite distance, the relative positions of the left and right images are equal, and on the other hand, each of the optical device 301 and the optical device 401A appears to be at a finite distance, and therefore the relative position of the left and right images appears to be shifted by the parallax.

The correction procedure is shown in the flowchart of FIG. 17. After stopping the vehicle 101 (601), the stereocamera 200 captures images of the infinite distance charts 304 and 401B (602). The left and right cameras 201 captures images of the infinite distance chart 304 and the infinite distance chart 401B at the same time.

After finishing the photographing (602), from the captured left and right images, the image processing unit 203 generates respective geometric transformation images using the information in the correction parameter memory 205 of FIG. 10 (603).

The image processing unit 203 corrects the relative rotation shift of the left and right images by using the infinite distance chart 304 and the infinite distance chart 401B of the left and right images after geometric transformation (604). The image processing unit 203 corrects the relative translational shift of the left and right images by using the infinite distance chart 304 or the infinite distance chart 401B of the left and right images after geometric transformation (605). The infinite distance chart 401B rewrites the data in the correction parameter memory 205 illustrated in FIG. 10 in consideration of the correction amount obtained in steps 603 and 604 above (606).

By placing the two optical devices 301 and 4011A that irradiate the infinite distance charts 304 and 401B as described above to perform photographing with the stereocamera 200, it is possible to correct the relative translation and rotation of the left and right images.

<Conclusions>

With the the method of claim 1, it is possible to provide the finite distance chart 401 and the infinite distance chart 304 in a space-saving manner at low cost, and it is possible to highly accurately correct the stereocamera while relaxing the installation accuracy of the vehicle 101.

With the method of claim 2, it is possible to correct the relative position (translational shift) of the image.

with the method of claim 3, it is possible to provide the optical device 301 at low cost.

with the method of claim 4, it is possible to perform correction in the rotation direction of the camera from the image of the finite distance chart 401.

With the method of claim 5, the size of the through hole 411 is determined by the installation error of the stereocamera 200, i.e., the accuracy of the stop position of the vehicle 101. It is possible to highly accurately correct the stereocamera 200 while relaxing the installation accuracy of the vehicle 101 according to the size of the diameter of the through hole 411.

with the method of claim 6, the size of the through hole 411 is determined by the installation error of the stereocamera 200, i.e., the accuracy of the stop position of the vehicle 101. It is possible to highly accurately correct the stereocamera 200 while relaxing the installation accuracy of the vehicle 101 according to the size of the diameter of the through hole 411. It is possible to install the optical device 301 on the back surface of the finite distance chart 401, the virtual image of the infinite distance chart 304 can be transmitted through the through hole 411 and captured by the stereocamera 200, and the correction device can be compactly configured.

With the method of claim 7, it is possible to correct the stereocamera 200 by alternately capturing the virtual image from the optical device 301 and an image of the finite distance chart 401 with the correction device configured to be compact.

With the method of claim 8, it is possible to correct the relative translation and rotation of the left and right images by placing the two optical devices 301 and 4011A that irradiate the infinite distance charts 304 and 401B and performing photographing with the stereocamera 200.

With the method of claim 9, in the image of the stereocamera 200, the area below the vanishing point is the area where the road surface and the object in front appear, which is an important area for object recognition, and the area above the vanishing point is the area where there are many objects that do not require accuracy such as signals, signs, and the sky. Therefore, it is desirable to place the infinite distance chart 304 so as to appear above the vanishing point. On the other hand, in order to secure the recognition performance of a distant object, the stereocamera 200 can be placed so that the vicinity of the optical axis of the lens having high resolution coincides with the vanishing point.

with the method of claim 10, it is possible to make it clear the boundary between the infinite distance chart 304 and the finite distance chart 401 and to facilitate image processing.

The present invention is not limited to the embodiments described above, and includes various modifications. For example, the embodiments described above have been described in detail for the purpose of explaining the present invention in an easy-to-understand manner, and are not necessarily limited to those having all the configurations described above. A part of the configuration of a certain embodiment can be replaced by the configuration of other embodiments, and the configuration of other embodiments can be added to the configuration of a certain embodiment. For a part of the configuration of each embodiment, any of addition, deletion, and substitution of other configurations can be applied alone or in combination as long as supported by the appended claims.

**Claims**

1. A method for correcting a stereocamera (200) mounted on a vehicle (101), wherein

   a first optical device (301) that has a first chart (304) having a predetermined pattern and a mirror surface (306) having a diameter equal to or greater than a baseline length (L) of the stereocamera (200) generates a virtual image of the first chart (304), and

the stereocamera (200) uses images obtained by capturing the virtual image with a plurality of cameras (201) to correct a parameter corresponding to the relative position of the images obtained by the cameras (201),

**characterized in that** the first optical device (301) includes either a reflecting telescope or a catadioptric telescope.

2. The method for correcting the stereocamera (200) according to claim 1, wherein the first optical device (301) generates the virtual image at a substantially infinite distance.

3. The method for correcting the stereocamera (200) according to claim 1, wherein a film camera is attached to an eyepiece portion of the first optical device (301), and the first chart (304) is placed on a film guide rail of the film camera.

4. The method for correcting the stereocamera (200) according to any one of claims 1 to 3, wherein a second chart (401) placed at a distance different from a distance of the virtual image generated by the first optical device (301) is photographed by a plurality of cameras (201) included in the stereocamera (200), and a parameter corresponding to rotation of an image obtained by the camera is corrected by using an image of the second chart (401).

5. The method for correcting the stereocamera (200) according to claim 4, wherein the second chart (401) has a through hole through which a housing (302) of the first optical device (301) penetrates.

6. The method for correcting the stereocamera (200) according to claim 4, wherein the second chart (401) has a through hole (411) through which the virtual image is transmitted at two points separated by a baseline length (L) of the stereocamera (200).

7. The method for correcting the stereocamera (200) according to claim 4, wherein at least one of the first optical device (301) and the second chart (401) is movable, and when the stereocamera (200) photographs the first chart (304) and the second chart (401), the at least one of the first optical device (301) and the second chart (401) is moved to a position where one of the first optical device (301) and the second chart (401) does not interrupt another.

8. The method for correcting the stereocamera (200) according to any one of claims 1 to 3, wherein a second optical device (401A) that has a third chart (401B) having a predetermined pattern at a position different from a position of the first optical device (301) and has a mirror surface (306) having a diameter equal to or greater than a baseline length (L) of the stereocamera (200) generates a virtual image of the third chart (401B), a plurality of cameras (201) included in the stereocamera (200) capture a virtual image of the third chart (401B), and parameters corresponding to rotation and translation of an image obtained by the camera are corrected using an image of the first chart (304) and an image of the third chart (401B).

9. The method for correcting the stereocamera (200) according to claim 4, wherein the first optical device (301) is placed above at least any one of an optical axis (C) or a vanishing point of the stereocamera (200) or a vehicle height indicating a highest position of the vehicle (101).

10. The method for correcting the stereocamera (200) according to claim 4, wherein at least one of the first chart (304) and the second chart (401) gives a boundary with another a color different from a color of the first chart (304) and a color of the second chart (401).

11. A device for correcting a stereocamera (200) mounted on a vehicle (101), comprising:

a first optical device (301) that has a first chart (304) having a predetermined pattern and a mirror surface (306) having a diameter equal to or greater than a baseline length (L) of the stereocamera (200) and generates a virtual image of the first chart (304); and

the stereocamera (200) that uses images obtained by capturing the virtual image with a plurality of cameras (201) to correct a parameter corresponding to the relative position of the images obtained by the cameras (201),

**characterized in that** the first optical device (301) includes either a reflecting telescope or a catadioptric telescope.

12. The device for correcting the stereocamera (200) according to claim 11, wherein the first optical device (301) generates the virtual image at a substantially infinite distance.

13. The device for correcting the stereocamera (200) according to claim 11, wherein a film camera is attached to an eyepiece portion of the first optical device (301), and the first chart (304) is placed on a film guide rail of the film camera.

14. The device for correcting the stereocamera (200) according to any one of claims 11 to 13, wherein a second chart (401) placed at a distance different from a distance of the virtual image generated by the first optical device (301) is photographed by a plurality of cameras (201) included in the stereocamera (200), and a parameter corresponding to rotation of an image obtained by the camera is corrected by using an image of the second chart (401).

15. The device for correcting the stereocamera (200) according to claim 14, wherein the second chart (401) has a through hole through which a housing (302) of the first optical device (301) penetrates.

16. The device for correcting the stereocamera (200) according to claim 14, wherein the second chart (401) has a through hole through which the virtual image is transmitted at two points separated by a baseline length (L) of the stereocamera (200).

17. The device for correcting the stereocamera (200) according to claim 14, wherein at least one of the first optical device (301) and the second chart (401) is movable, and when the stereocamera (200) photographs the first chart (304) and the second chart (401), the at least one of the first optical device (301) and the second chart (401) is moved to a position where one of the first optical device (301) and the second chart (401) does not interrupt another.

18. The device for correcting the stereocamera (200) according to any one of claims 11 to 13, further comprising

a second optical device (401A) that includes a third chart (401B) having a predetermined pattern at a position different from a position of the first optical device (301) and a mirror surface (306) having a diameter equal to or greater than a baseline length (L) of the stereocamera (200), and generates a virtual image of the third chart (401B), wherein
a plurality of cameras (201) included in the stereocamera (200) capture a virtual image of the third chart (401B), and parameters corresponding to rotation and translation of an image obtained by the camera are corrected using an image of the first chart (304) and an image of the third chart (401B).

19. The device for correcting the stereocamera (200) according to claim **14,** wherein the first optical device (301) is placed above at least any one of an optical axis (C) or a vanishing point of the stereocamera (200) or a vehicle height indicating a highest position of the vehicle (101).

20. The device for correcting the stereocamera (200) according to claim 14, wherein at least one of the first chart (304) and the second chart (401) gives a boundary with another a color different from a color of the first chart (304) and a color of the second chart (401).

**Patentansprüche**

1. Verfahren zum Korrigieren einer Stereokamera (200), die auf einem Fahrzeug (101) befestigt ist, wobei:

eine erste optische Vorrichtung (301), die eine erste Tafel (304) mit einem vorbestimmten Muster, und eine Spiegeloberfläche (306) mit einem Durchmesser, der größer oder gleich einer Basislinienlänge (L) der Stereokamera (200) ist, aufweist, ein virtuelles Bild der ersten Tafel (304) erstellt und
die Stereokamera (200) Bilder, die durch Aufnehmen des virtuellen Bilds mit einer Vielzahl von Kameras (201) erhalten werden, verwendet, um einen Parameter, der der relativen Position der durch die Kameras (201) erhaltenen Bilder entspricht, zu korrigieren,
**dadurch gekennzeichnet, dass** die erste optische Vorrichtung (301) entweder ein Spiegelteleskop oder ein katadioptrisches Teleskop umfasst.

2. Verfahren zum Korrigieren einer Stereokamera (200) nach Anspruch 1, wobei die erste optische Vorrichtung (301) das virtuelle Bild in einem im Wesentlichen unendlichen Abstand erzeugt.

3. Verfahren zum Korrigieren einer Stereokamera (200) nach Anspruch 1, wobei eine Filmkamera an einem Augenteilabschnitt der ersten optischen Vorrichtung (301) angebracht ist, und wobei die erste Tafel (304) auf einer Filmführungsschiene der Filmkamera angeordnet ist.

4. Verfahren zum Korrigieren einer Stereokamera (200) nach einem der Ansprüche 1 bis 3, wobei eine zweite Tafel (401), die in einem Abstand angeordnet ist, der sich von einem Abstand des virtuellen Bilds, das durch die erste optische Vorrichtung (301) erstellt wird, unterscheidet, durch eine Vielzahl von Kameras (201), die in der Stereokamera (200) enthalten sind, fotografiert wird, und ein Parameter, der einer Drehung eines Bilds, das durch die Kamera erhalten wird, unter Verwendung eines Bilds der zweiten Tafel (401) korrigiert wird.

5. Verfahren zum Korrigieren einer Stereokamera (200) nach Anspruch 4, wobei die zweite Tafel (401) ein Durchgangsloch aufweist, durch das ein Gehäuse (302) der ersten optischen Vorrichtung (301) hindurchdringt.

6.  Verfahren zum Korrigieren einer Stereokamera (200) nach Anspruch 4, wobei die zweite Tafel (401) ein Durchgangsloch (411) aufweist, durch das das virtuelle Bild an zwei Punkten, getrennt durch eine Basislinienlänge (L) der Stereokamera (200), übertragen wird.

7.  Verfahren zum Korrigieren einer Stereokamera (200) nach Anspruch 4, wobei zumindest eine aus der ersten optischen Vorrichtung (301) und der zweiten Tafel (401) bewegbar ist, und wenn die Stereokamera (200) die erste Tafel (304) und die zweite Tafel (401) fotografiert, die zumindest eine aus der ersten optischen Vorrichtung (301) und der zweiten Tafel (401) in eine Position bewegt wird, in der eine aus der ersten optischen Vorrichtung (301) und der zweiten Tafel (401) die andere nicht unterbricht.

8.  Verfahren zum Korrigieren einer Stereokamera (200) nach einem der Ansprüche 1 bis 3, wobei eine zweite optische Vorrichtung (401A), die eine dritte Tafel (401B) mit einem vorbestimmten Muster an einer Position aufweist, die sich von einer Position der ersten optischen Vorrichtung (301) unterscheidet, und eine Spiegeloberfläche (306) aufweist, die einen Durchmesser von größer oder gleich einer Basislinienlänge (L) der Stereokamera (200) aufweist, ein virtuelles Bild der dritten Tafel (401B) erzeugt, wobei eine Vielzahl von Kameras (201), die in der Stereokamera (200) enthalten sind, ein virtuelles Bild der dritten Tafel (401B) aufnehmen und Parameter, die der Drehung und Translation eines Bilds, das durch die Kamera erhalten wird, entsprechen, unter Verwendung eines Bilds der ersten Tafel (304) und eines Bilds der dritten Tafel (401B) korrigiert werden.

9.  Verfahren zum Korrigieren der Stereokamera (200) nach Anspruch 4, wobei die erste optische Vorrichtung (301) oberhalb zumindest einer beliebigen aus einer optischen Achse (C) oder einem Fluchtpunkt der Stereokamera (200) oder einer Fahrzeughöhe, die eine höchste Position des Fahrzeugs (101) angibt, angeordnet ist.

10.  Verfahren zum Korrigieren einer Stereokamera (200) nach Anspruch 4, wobei zumindest eine aus der ersten Tafel (304) und der zweiten Tafel (401) eine Grenze mit einer anderen Farbe angibt, die sich von einer Farbe der ersten Tafel (304) und einer Farbe der zweiten Tafel (401) unterscheidet.

11.  Vorrichtung zum Korrigieren einer Stereokamera (200), die auf einem Fahrzeug (101) angebracht ist, umfassend:

eine erste optische Vorrichtung (301), die eine erste Tafel (304) mit einem vorbestimmten Muster, und eine Spiegeloberfläche (306) mit einem Durchmesser, der größer oder gleich einer Basislinienlänge (L) der Stereokamera (200) ist, aufweist, ein virtuelles Bild der ersten Tafel (304) erstellt und
die Stereokamera (200), die Bilder verwendet, die durch Aufnehmen des virtuellen Bilds mit einer Vielzahl von Kameras (201) erhalten werden, um einen Parameter, der der relativen Position der durch die Kameras (201) erhaltenen Bilder entspricht, zu korrigieren,
**dadurch gekennzeichnet, dass** die erste optische Vorrichtung (301) entweder ein Spiegelteleskop oder ein katadioptrisches Teleskop umfasst.

12.  Vorrichtung zum Korrigieren einer Stereokamera (200) nach Anspruch 11, wobei die erste optische Vorrichtung (301) das virtuelle Bild in einem im Wesentlichen unendlichen Abstand erzeugt.

13.  Vorrichtung zum Korrigieren einer Stereokamera (200) nach Anspruch 11, wobei eine Filmkamera an einem Augenteilabschnitt der ersten optischen Vorrichtung (301) angebracht ist, und wobei die erste Tafel (304) auf einer Filmführungsschiene der Filmkamera angeordnet ist.

14.  Vorrichtung zum Korrigieren einer Stereokamera (200) nach einem der Ansprüche 11 bis 13, wobei eine zweite Tafel (401), die in einem Abstand angeordnet ist, der sich von einem Abstand des virtuellen Bilds, das durch die erste optische Vorrichtung (301) erstellt wird, unterscheidet, durch eine Vielzahl von Kameras (201), die in der Stereokamera (200) enthalten sind, fotografiert wird, und ein Parameter, der einer Drehung eines Bilds, das durch die Kamera erhalten wird, entspricht, unter Verwendung eines Bilds der zweiten Tafel (401) korrigiert wird.

15.  Vorrichtung zum Korrigieren einer Stereokamera (200) nach Anspruch 14, wobei die zweite Tafel (401) ein Durchgangsloch aufweist, durch das ein Gehäuse (302) der ersten optischen Vorrichtung (301) hindurchdringt.

16.  Vorrichtung zum Korrigieren einer Stereokamera (200) nach Anspruch 14, wobei die zweite Tafel (401) ein Durchgangsloch aufweist, durch das das virtuelle Bild an zwei Punkten, getrennt durch eine Basislinienlänge (L) der Stereokamera (200), übertragen wird.

17.  Vorrichtung zum Korrigieren einer Stereokamera (200) nach Anspruch 14, wobei zumindest eine aus der ersten optischen Vorrichtung (301) und der zweiten Tafel (401) bewegbar ist, und wenn die Stereokamera (200) die erste Tafel (304) und die zweite Tafel (401) fotografiert, die zumindest eine aus der ersten optischen Vorrichtung (301) und der zweiten Tafel (401) in eine Position bewegt wird, in der eine aus der ersten optischen Vorrichtung (301) und der zweiten Tafel (401) die andere nicht unterbricht.

18. Vorrichtung zum Korrigieren einer Stereokamera (200) nach einem der Ansprüche 11 bis 13, die ferner Folgendes umfasst:

eine zweite optische Vorrichtung (401A), die eine dritte Tafel (401B) mit einem vorbestimmten Muster an einer Position aufweist, die sich von einer Position der ersten optischen Vorrichtung (301) unterscheidet, und eine Spiegeloberfläche (306) aufweist, die einen Durchmesser von größer oder gleich einer Basislinienlänge (L) der Stereokamera (200) aufweist, ein virtuelles Bild der dritten Tafel (401B) erzeugt,
wobei eine Vielzahl von Kameras (201), die in der Stereokamera (200) enthalten sind, ein virtuelles Bild der dritten Tafel (401B) aufnehmen und Parameter, die der Drehung und Translation eines Bilds, das durch die Kamera erhalten wird, entsprechen, unter Verwendung eines Bilds der ersten Tafel (304) und eines Bilds der dritten Tafel (401B) korrigiert werden.

19. Vorrichtung zum Korrigieren der Stereokamera (200) nach Anspruch 14, wobei die erste optische Vorrichtung (301) oberhalb zumindest einer beliebigen aus einer optischen Achse (C) oder einem Fluchtpunkt der Stereokamera (200) oder einer Fahrzeughöhe, die eine höchste Position des Fahrzeugs (101) angibt, angeordnet ist.

20. Vorrichtung zum Korrigieren einer Stereokamera (200) nach Anspruch 14, wobei zumindest eine aus der ersten Tafel (304) und der zweiten Tafel (401) eine Grenze mit einer anderen Farbe angibt, die sich von einer Farbe der ersten Tafel (304) und einer Farbe der zweiten Tafel (401) unterscheidet.

## Revendications

1. Procédé de correction d'une stéréocaméra (200) montée sur un véhicule (101), dans lequel

un premier dispositif optique (301) qui possède une première mire (304) ayant un motif prédéterminé et une surface de miroir (306) ayant un diamètre égal ou supérieur à une longueur de référence (L) de la stéréocaméra (200) génère une image virtuelle de la première mire (304), et la stéréocaméra (200) utilise les images obtenues en capturant l'image virtuelle avec une pluralité de caméras (201) afin de corriger un paramètre qui correspond à la position relative des images obtenues par les caméras (201), **caractérisé en ce que** le premier dispositif optique (301) comporte soit un télescope réfléchissant, soit un télescope catadioptrique.

2. Procédé de correction d'une stéréocaméra (200) selon la revendication 1, dans lequel le premier dispositif optique (301) génère l'image virtuelle à une distance sensiblement infinie.

3. Procédé de correction d'une stéréocaméra (200) selon la revendication 1, dans lequel une caméra argentique est fixée sur une partie d'oculaire du premier dispositif optique (301), et la première mire (304) est placée sur un rail de guidage de pellicule de la caméra argentique.

4. Procédé de correction d'une stéréocaméra (200) selon l'une quelconque des revendications 1 à 3, dans lequel une deuxième mire (401) placée à une distance différente d'une distance de l'image virtuelle générée par le premier dispositif optique (301) est photographiée par une pluralité de caméras (201) incluses dans la stéréocaméra (200), et un paramètre qui correspond à la rotation d'une image obtenue par la caméra est corrigé en utilisant une image de la deuxième mire (401).

5. Procédé de correction d'une stéréocaméra (200) selon la revendication 4, dans lequel la deuxième mire (401) possède un orifice traversant dans lequel un logement (302) du premier dispositif optique (301) pénètre.

6. Procédé de correction d'une stéréocaméra (200) selon la revendication 4, dans lequel la deuxième mire (401) possède un orifice traversant (411) par lequel l'image virtuelle est transmise au niveau de deux points séparés par une longueur de référence (L) de la stéréocaméra (200).

7. Procédé de correction d'une stéréocaméra (200) selon la revendication 4, dans lequel au moins l'un du premier dispositif optique (301) et de la deuxième mire (401) est mobile, et, lorsque la stéréocaméra (200) photographie la première mire (304) et la deuxième mire (401), l'au moins l'un du premier dispositif optique (301) et de la deuxième mire (401) est déplacé vers un emplacement auquel l'un du premier dispositif optique (301) et de la deuxième mire (401) ne gêne pas l'autre.

8. Procédé de correction d'une stéréocaméra (200) selon l'une quelconque des revendications 1 à 3, dans lequel un deuxième dispositif optique (401A) qui possède une troisième mire (401B) ayant un motif prédéterminé à un emplacement différent d'un emplacement du premier dispositif optique (301) et qui possède une surface de miroir (306) ayant un diamètre égal ou supérieur à une longueur de référence (L) de la stéréocaméra (200) génère une image virtuelle de la troisième mire (401B), une pluralité de caméras (201) incluses dans la stéréocaméra (200) capture une image virtuelle de la troisième mire (401B), et des paramètres qui correspondent à la rotation et à la translation d'une image obtenue par la caméra sont corrigés en utilisant une image de la première mire (304) et une image de la troisième mire (401B).

9. Procédé de correction d'une stéréocaméra (200) selon la revendication 4, dans lequel le premier dispositif optique (301) est placé au-dessus d'au moins n'importe lequel d'un axe optique (C) ou d'un point de fuite de la stéréocaméra (200) ou d'une hauteur de véhicule qui indique une position la plus haute du véhicule (101).

10. Procédé de correction d'une stéréocaméra (200) selon la revendication 4, dans lequel au moins l'une de la première mire (304) et de la deuxième mire (401) offre une limite avec l'autre d'une couleur différente d'une couleur de la première mire (304) et d'une couleur de la deuxième mire (401).

11. Dispositif de correction d'une stéréocaméra (200) montée sur un véhicule (101), comprenant :

un premier dispositif optique (301) qui possède une première mire (304) ayant un motif prédéterminé et une surface de miroir (306) ayant un diamètre égal ou supérieur à une longueur de référence (L) de la stéréocaméra (200) et qui génère une image virtuelle de la première mire (304) ; et
la stéréocaméra (200) qui utilise les images obtenues en capturant l'image virtuelle avec une pluralité de caméras (201) afin de corriger un paramètre qui correspond à la position relative des images obtenues par les caméras (201),
**caractérisé en ce que** le premier dispositif optique (301) comporte soit un télescope réfléchissant, soit un télescope catadioptrique.

12. Dispositif de correction d'une stéréocaméra (200) selon la revendication 11, dans lequel le premier dispositif optique (301) génère l'image virtuelle à une distance sensiblement infinie.

13. Dispositif de correction d'une stéréocaméra (200) selon la revendication 11, dans lequel une caméra argentique est fixée sur une partie d'oculaire du premier dispositif optique (301), et la première mire (304) est placée sur un rail de guidage de pellicule de la caméra argentique.

14. Dispositif de correction d'une stéréocaméra (200) selon l'une quelconque des revendications 11 à 13, dans lequel une deuxième mire (401) placée à une distance différente d'une distance de l'image virtuelle générée par le premier dispositif optique (301) est photographiée par une pluralité de caméras (201) incluses dans la stéréocaméra (200), et un paramètre qui correspond à la rotation d'une image obtenue par la caméra est corrigé en utilisant une image de la deuxième mire (401).

15. Dispositif de correction d'une stéréocaméra (200) selon la revendication 14, dans lequel la deuxième mire (401) possède un orifice traversant dans lequel un logement (302) du premier dispositif optique (301) pénètre.

16. Dispositif de correction d'une stéréocaméra (200) selon la revendication 14, dans lequel la deuxième mire (401) possède un orifice traversant par lequel l'image virtuelle est transmise au niveau de deux points séparés par une longueur de référence (L) de la stéréocaméra (200).

17. Dispositif de correction d'une stéréocaméra (200) selon la revendication 14, dans lequel au moins l'un du premier dispositif optique (301) et de la deuxième mire (401) est mobile, et, lorsque la stéréocaméra (200) photographie la première mire (304) et la deuxième mire (401), l'au moins l'un du premier dispositif optique (301) et de la deuxième mire (401) est déplacé vers un emplacement auquel l'un du premier dispositif optique (301) et de la deuxième mire (401) ne gêne pas l'autre.

18. Dispositif de correction d'une stéréocaméra (200) selon l'une quelconque des revendications 11 à 13, comprenant en outre

un deuxième dispositif optique (401A) qui possède une troisième mire (401B) ayant un motif prédéterminé à un emplacement différent d'un emplacement du premier dispositif optique (301) et qui possède une surface de miroir (306) ayant un diamètre égal ou supérieur à une longueur de référence (L) de la stéréocaméra (200), et génère une image virtuelle de la troisième mire (401B), dans lequel une pluralité de caméras (201) incluses dans la stéréocaméra (200) capture une image virtuelle de la troisième mire (401B), et des paramètres qui correspondent à la rotation et à la translation d'une image obtenue par la caméra sont corrigés en utilisant une image de la première mire (304) et une image de la troisième mire (401B).

**19.** Dispositif de correction d'une stéréocaméra (200) selon la revendication 14, dans lequel le premier dispositif optique (301) est placé au-dessus d'au moins n'importe lequel d'un axe optique (C) ou d'un point de fuite de la stéréocaméra (200) ou d'une hauteur de véhicule qui indique une position la plus haute du véhicule (101).

**20.** Dispositif de correction d'une stéréocaméra (200) selon la revendication 14, dans lequel au moins l'une de la première mire (304) et de la deuxième mire (401) offre une limite avec l'autre d'une couleur différente d'une couleur de la première mire (304) et **d'une** couleur de la deuxième mire (401).

## FIG. 1

## FIG. 2

## FIG. 3

*FIG. 4*

401

*FIG. 5*

401

*FIG. 6*

411-L          411-R

401

301

201-L          201-R

L BASELINE LENGTH

*FIG. 7*

*FIG. 8*

*FIG. 9*

# FIG. 10

# FIG. 11

# FIG. 12

# FIG. 13

```
                    START

          601  →  STOP VEHICLE

         602b  →  CAPTURE IMAGE OF
                  FINITE DISTANCE CHART

          607  →  MOVE FINITE DISTANCE CHART

         602a  →  CAPTURE IMAGE OF
                  INFINITE DISTANCE CHART

          603  →  GENERATE GEOMETRIC
                  TRANSFORMATION IMAGE

          604  →  CORRECT ROLL

          605  →  CORRECT TRANSLATION

          606  →  REWRITE CORRECTION DATA

                    END
```

19

# FIG. 14

# FIG. 15

```
                    START

                  601
              STOP VEHICLE

                  602b
            CAPTURE IMAGE OF
          FINITE DISTANCE CHART

                  607
        MOVE FINITE DISTANCE CHART

                  602a
            CAPTURE IMAGE OF
          INFINITE DISTANCE CHART

                  608
            MOVE OPTICAL DEVICE

                  603
          GENERATE GEOMETRIC
          TRANSFORMATION IMAGE

                  604
              CORRECT ROLL

                  605
            CORRECT TRANSLATION

                  606
          REWRITE CORRECTION DATA

                    END
```

# FIG. 16

# FIG. 17

START

STOP VEHICLE — 601

CAPTURE IMAGE OF CHART — 602

GENERATE GEOMETRIC TRANSFORMATION IMAGE — 603

CORRECT ROLL — 604

CORRECT TRANSLATION — 605

REWRITE CORRECTION DATA — 606

END

# FIG. 18

RIGHT IMAGE

401A

301

401B

304

LEFT IMAGE

401A

401B

301

304

# FIG. 19

301

320

321-R

322

321-L

BASELINE LENGTH

**EP 4 012 495 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004132870 A
- JP 2012132739 A
- US 7124046 B2
- DE 102008008619 A1